# EUROPEAN PATENT SPECIFICATION

(11) **EP 0 536 657 B1**
(45) Date of publication and mention of the grant of the patent: **20.01.1999**
(21) Application number: 92116912.4
(22) Date of filing: 02.10.1992
(51) Int. Cl.: H04N 7/00

(54) **Apparatus for detecting line and frame sync signals from television signals**
Einrichtung zur Erkennung von Zeilen- und Halbbildsynchronsignalen aus Fernsehsignalen
Dispositif pour détecter les signaux de synchronisation ligne et trame d'un signal de télévision

(30) Priority: 04.10.1991 KR 1740591
(43) Date of publication of application: 14.04.1993
(73) Proprietor: DAEWOO ELECTRONICS CO., LTD, Jung-Gu, Seoul 100-095 (KR)
(72) Inventor: Kim, Young-Sang, Jungrang-Ku, Seoul (KR)
(74) Representative: Turi, Michael, Dipl.-Phys.

(56) References cited:
- EP-A- 297 918
- WO-A-84/02442
- IEEE JOURNAL OF SOLID-STATE CIRCUITS vol. 23, no. 3, June 1988, NEW YORK US pages 625 - 629 , XP50931 P. L. O'LEARY ET AL. '10-MHz 64-bit Error Tolerant Signature Recognition Circuit.'
- IEE PROCEEDINGS F. COMMUNICATIONS, RADAR & SIGNAL PROCESSING vol. 133, no. 4, July 1986, STEVENAGE GB pages 374 - 383 J.S. LOTHIAN ET AL. 'The C-MAC/packet system for satellite broadcasting.'
- R.Mäusl: Fernsehtechnik. Von der Kamera bis zum Bildschirm. Hüthig, Heidelberg, 1991, pp.136-137

## Description

### Field of the Invention

The present invention relates to a receiver of television signals of MAC-packet type which is adapted for a high definition television(HDTV); and more particularly, to an apparatus for detecting line and frame sync signals from a television signal of the MAC-packet type.

### Background of the Invention

As is well known in the art, the MAC type is one of the types of packet transmission in the form of TDM(Time Division Multiplexing) on the basis of DBS(Direct Broadcasting by Satellite); and the image component in the MAC/packet system is referred to as the MAC(Multiplexed Analogue Components) signal which comprises a plurality of frame signals, each of the frame signals further including 625 line signals. The MAC signal is capable of providing an improved resolution and many other services; and is also compatible with an interlaced scanned image having 625 lines as the PAL system. Consequently, although the HDTV signal source may comprise 1250 line, 50 Hz field rate, 2:1 interlaced signals, the signals actually transmitted will have 625 lines, 50 Hz field rate, 2:1 interlaced so that they can be received by non-HDTV receivers.

The MAC signal does not have a line sync signal occupying a long period as can be found in the PAL system. Instead, there is a large amount of data burst in a digital form in the beginning portion of each of the lines. The data burst is transmitted on horizontal blanking intervals. Only some bits of the data burst are utilized as the line sync signal. The remainder of the data burst is used for the transmission of sound and data information. The line and frame synchronization are accomplished through the use of the line sync signal of the six bits contained in the data burst.

EP-A-0 297 918 describes an apparatus for detecting line and frame sync signals from digital data of MAC type television signals according to the preamble of claim 1. The line and frame synchronisation is accomplished by a state machine with an implemented state diagram including feedback paths.

R. Mäus1, "Fernsehtechnik. Von der Kamera bis zum Bildschirm", Hüthig, Heidelberg, 1991, pp. 136-137, describes the data burst of a MAC signal for line and frame synchronisation. For purposes of line synchronistion a 6-bit word W1 (001011) or an inverted word W2 (110100) is transmitted. The assignment of these words to particular lines in successive frames is defined. At the end of a frame the alternating sequence of W1 and W2 is changed in order to mark the beginning of a new frame.

Lothian et al., "The C-MAC/packet system for satellite broadcasting", IEE Proc. Vol. 133, Pt. F, July 1986, pp. 374-383, describes methods for line and frame synchronisation in MAC receivers. The line synchronisation is based on two 6-bit words, one of which is the inverse of the other. These words are transmitted alternatively on consecutive lines, defining odd and even lines. The alternating sequence is broken on lines 623 and 624, so that the end of the frame can be identified.

WO-A-84/02442 describes an apparatus for receiving MAC signals comprising means for line and frame synchronisation based on a 3-bit error signal. A sync word recognition circuit converts a data stream to an error pattern which represents the number of bits that the input is away from a 7-bit data pattern W1, i.e. the hamming distance between the received input and the data pattern W1. The hamming distance is delayed by a line delay circuit whose output is fed to an adder. A further input of this adder is the inverted hamming distance. The output of the adder is received by a comparing circuit that generates a line sync detection signal. Another comparing circuit generates a frame sync signal: The hamming distance is added to a delayed hamming distance. This signal is inverted as well as being delayed once more. Then the inverted and the delayed signals are added and passed to the comparing circuit that generates the frame sync signal.

### Summary of the Invention

Accordingly, need has existed for the development of a simple device for the detection of said line and frame sync signals.

It is an object of the present invention to provide an apparatus for readily detecting line and frame sync signals by using the digital data of line sync signals.

The above and other objects of the present invention are accomplished by providing an apparatus for detecting line and frame sync signals from digital data of a television signal, each of the line sync signals having alternately a first and a second data patterns W1 and W2 in a digital form, the data patterns W1 and W2 being uncorrelated with each other on a bit-by-bit basis, each of the data patterns W1 and W2 consisting of at least three least significant bits, i.e. LSBs, and three most significant bits, i.e. MSBs, the three LSBs and three MSBs being uncorrelated with each other on a bit-by-bit basis, when the MSBs are taken in reverse order, each of the frame sync signals having a first pair of same data patterns and a second pair of same data patterns, the data pattern of said first pair and the data pattern of said second pair being uncorrelated with each other on a bit-by-bit basis, the apparatus being characterized by a first uncorrelation detector comprising a 1H delay circuit for delaying the line sync signal by one horizontal line period and means for logically combining the line sync signal and a 1H delayed line sync signal delayed by said 1H delay circuit, for detecting uncorrelation between the data patterns of the line sync signal and the 1H delayed line sync signal and for generating a corresponding first output signal; a second uncorrelation detector, comprising means for logically combining said LSBs and MSBs, for detecting uncorrelation between said three LSBs and said three MSBs in a data pattern being received, said three MSBs being taken in reverse order, thus detecting one of the data patterns W1 and W2, and for generating a corresponding second output signal, when detecting said data patterns W1 or W2; means for detecting the line sync signals in response to said first and second output signals; and means for detecting the frame sync signals in response to said first and second output signals.

### Biref Description of the Drawings

The above and other objects and features of the present invention will become apparent from the following description given in conjunction with the accompanying drawings.
Fig. 1 illustrates the typical transmission pattern of line sync signals of a MAC signal;
Fig. 2 illustrates an apparatus for detecting line and frame sync signals in accordance with a preferred embodiment of the present invention; and
Fig. 3 illustrates a second uncorrelation detector as shown in Fig. 2.

### Detailed Description of the Invention

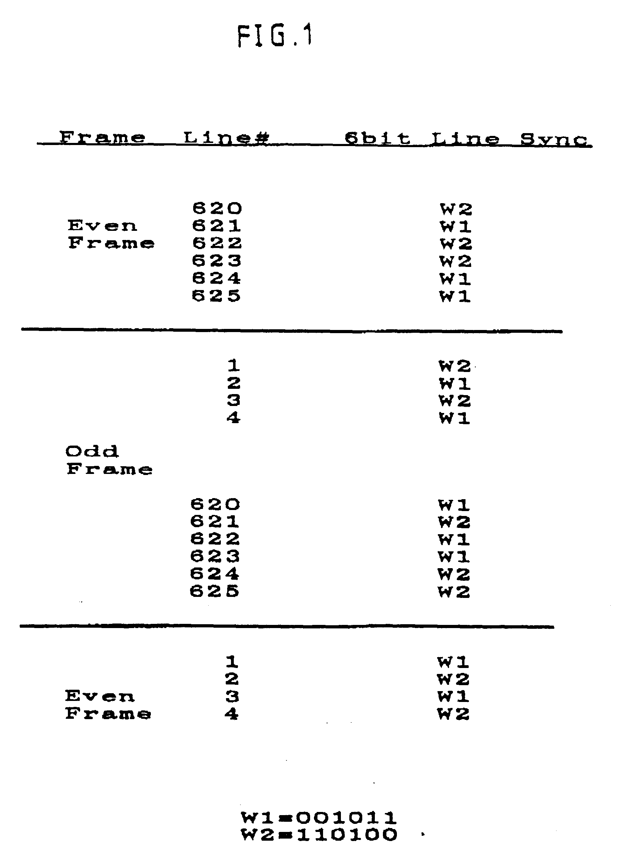

Referring to Fig. 1, there is shown a typical transmission pattern of line sync signals, wherein the frame line numbers of even and odd frames are shown in the left column and the patterns of the 6 bit line sync signals are shown in the right column. By way of illustration, in the even frame as shown in Fig. 1, the line sync signal for line 1 has a first data pattern W1 of 001011 and the line sync signal for line 2 has a second data pattern W2 of 110100. These first and second data patterns are alternately provided for each of the lines and are complementary or uncorrelated with each other on a bit-by-bit basis. However, both lines 622 and 623 and both lines 624 and 625 near the end of the frame have the second and the first data patterns, respectively, which are used as a frame sync signal. Such patterns of the even frames are opposite to those of the odd frames.

Each of the data patterns W1 and W2 is divided into two parts: three least significant bits(LSBs) and three most significant bits(MSBs). In the data pattern W1, for example, the three LSBs, 001, are complementary or uncorrelated with the reverse of the three MSBs, 011, on a bit-by-bit basis. Similarly, in the data pattern W2, the three LSBs, 110, are complementary or uncorrelated with the reverse of the three MSBs 100 on a bit-by-bit basis.

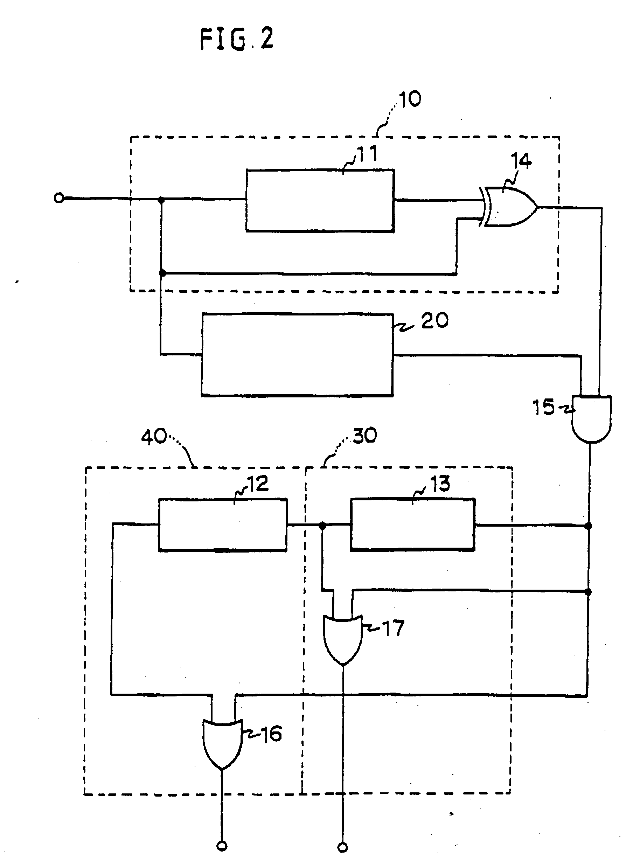

Referring now to Fig. 2, there is shown an apparatus for detecting line sync and frame sync signals from MAC-packet television signals in accordance with the present invention. The apparatus comprises a first uncorrelation detector 10, a second uncorrelation detector 20, a line sync detector 30 and a frame sync detector 40.

The first uncorrelation detector 10 detects the uncorrelation between the data patterns W1 and W2 as described with reference to Fig. 1 above and comprises a 1H delay circuit 11 and an XOR(exclusive OR) circuit 14. Sequentially, the data pattern of line sync signals is directly applied to the XOR circuit 14 as an input signal and is also applied to the XOR circuit 14 as another input signal via the 1H delay circuit 11. The XOR circuit 14 produces a constant detection output at least during each of the data pattern intervals between lines 1 and 622, and inhibits this detection output when the data pattern of the previous line is the same as that of the current line. Hence, the output of XOR circuit 14, at the positions of said data patterns, alternates between lines 622 and 625.

That is, in case of the even frames as shown in Fig. 1, the output of the XOR circuit 14 results in a logical 1 during the intervals between lines 1 and 622. However, the output of the XOR circuit 14 becomes a logical 0 at least during the data pattern interval between lines 622 and 623. In this manner, the output of the XOR circuit 14 becomes a logical 1 at least during the data pattern interval between lines 623 and 624 and the output of the XOR circuit 14 becomes a logical 0 at least during the data pattern interval between lines 624 and 625.

Similarly, such logical operation of the XOR circuit 14 is also applied to the odd frames as shown in Fig. 1 and results in the same output as in the even frames. Therefore, even though the line sync signals are applied in the data patterns W1 and W2, the XOR circuit 14 can define the uncorrelation between the data patterns of the line sync signals and the 1H delayed line sync signals.

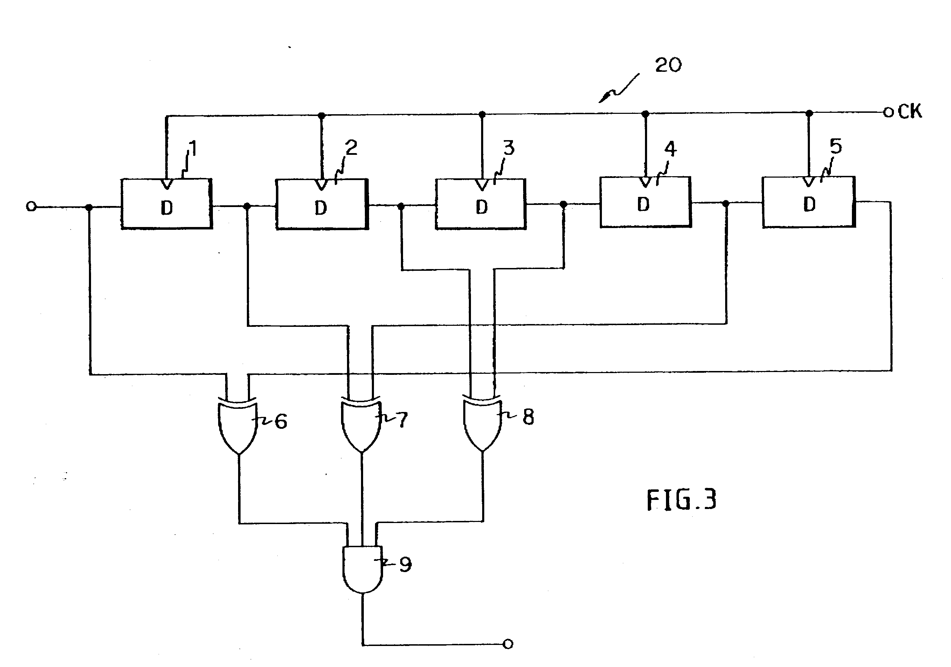

The second uncorrelation detector 20 detects the uncorrelation between the three respective LSBs and MSBs in terms of the data patterns of the line sync signals as described with reference to Fig. 1. Fig. 3 shows a detailed logical circuit diagram of the second uncorrelation detector 20 which comprises five D-FFs 1,2,3,4,5, three XOR circuits 6,7,8 and one 3-input AND circuit 9.

Each of the five D-FFs (Flip-Flops) 1,2,3,4,5 is continuously driven by a clock pulse CK to transfer serially the data patterns of the line sync signals by one bit at a time. Each input to the D-FF 1 and each output of the D-FF 5 are provided to the XOR circuit 6. Each output of the D-FF 1 and each output of the D-FF 4 are provided to the XOR circuit 7. And each output of the D-FF 2 and each output of the D-FF 3 are provided to the XOR circuit 8. Because one of the two input bits to the respective XOR circuits 6,7,8 are uncorrelated or complementary with each other, each of the three XOR circuit 6,7,8 always produces a logical 1 signal, when a data pattern W1 or W2 is transferred to the five D-FFs 1,2,3,4,5. The outputs of the three XOR circuits are sent to the AND circuit 9. As a result, the AND circuit always produces a logical 1 signal, when a data pattern W1 or W2 is transferred to the five D-FFs 1,2,3,4,5.

Accordingly, the uncorrelation existing between the LSBs and the MSBs is defined by the AND circuit 9 as a constant output signal, i.e. a logcal 1 signal during the data pattern intervals between lines 1 and 625.

Referring now to Fig. 2, the outputs of the first and the second uncorrelation detectors 10 and 20 are provided as two inputs to an AND circuit 15 in which the outputs are logically combined by a logical AND operation. As a result the output of the AND circuit 15 becomes a logical 1 at least within the data pattern intervals between lines 1 and 622 and is changed to 0, 1, 0 at least within the data pattern intervals between lines 622 and 625, respectively. These output signals are utilized to produce the line and the frame sync detection signals in the line and the frame sync detectors 30 and 40.

The line sync detector 30 comprises a 1H delay circuit 13 and an OR circuit 17. The 1H delay circuit 13 delays the output signal from the AND circuit 15 to produce a 1H delayed signal as an input signal to the OR circuit 17. The OR circuit 17 also directly receives the output signal of the AND circuit 15 as another input signal. Therefore, the OR circuit 17 produces a logical 1 signal which is used as the line sync detection signal within the data pattern intervals between lines 1 and 625.

The frame sync detector 40 comprises a 1H delay circuit 12 and an OR circuit 16 which are the same components as in the line sync detector 30 except that the 1H delay circuit 12 is connected to the output of the 1H delay circuit 13 in the line sync detector 30.

As a result, the output of the AND circuit 15 is twice delayed by the 1H delay circuits 13 and 12. The 2H delayed signal is applied as an input signal to the OR circuit 16, while the output signal of the AND circuit 15 is directly applied to the OR circuit 16 as another input signal. As a result, the OR circuit 16 produces a logical 1 signal within the data pattern intervals between lines 1 and 624 and produces a logical 0 signal within the data pattern interval between lines 624 and 625. Such change of output signal of the frame sync detector 40 occurs once for every 625 lines in case of both even and odd frames. Therefore, it is possible to detect the presence of the frame sync signal from the transmitted MAC in accordance with the present invention.

While the present invention has been shown and described with reference to a particular embodiment, it will be apparent to those skilled in the art that many changes and modifications may be made without departing from the scope of the invention as defined in the claims.

## Claims

1. An apparatus for detecting line and frame sync signals from digital data of a television signal,
a) each of the line sync signals having alternately a first and a second data patterns W1 and W2 in a digital form,
- the data patterns W1 and W2 being uncorrelated with each other on a bit-by-bit basis,
- each of the data patterns W1 and W2 consisting of at least three least significant bits, i.e. LSBs, and three most significant bits, i.e. MSBs,
- the three LSBs and three MSBs being uncorrelated with each other on a bit-by-bit basis, when the MSBs are taken in reverse order,
b) each of the frame sync signals having a first pair of same data patterns and a second pair of same data patterns,
- the data pattern of said first pair and the data pattern of said second pair being uncorrelated with each other on a bit-by-bit basis,
the apparatus being characterized by
c) a first uncorrelation detector comprising
- a 1H delay circuit for delaying the line sync signal by one horizontal line period and
- means for logically combining the line sync signal and a 1H delayed line sync signal delayed by said 1H delay circuit,
for detecting uncorrelation between the data patterns of the line sync signal and the 1H delayed line sync signal and for generating a corresponding first output signal;
d) a second uncorrelation detector, comprising means for logically combining said LSBs and MSBs, for detecting uncorrelation between said three LSBs and said three MSBs in a data pattern being received, said three MSBs being taken in reverse order, thus detecting one of the data patterns W1 and W2, and for generating a corresponding second output signal, when detecting said data patterns W1 or W2;
e) means for detecting the line sync signals in response to said first and second output signals; and
f) means for detecting the frame sync signals in response to said first and second output signals.

2. The apparatus as claimed in claim 1,
characterized in that
said means for detecting the line sync signals are designed for generating line sync detection signals and comprise
a) further means for logically combining said first and second output signals and
b) means for delaying by one horizontal line period the output signal of said further means for logically combining.

3. The apparatus as claimed in claim 1 or 2,
characterized in that
said means for detecting the frame sync signals are designed for generating frame sync detection signals and comprise
a) still further means for logically combining said first and second output signals and
b) means for delaying by two horizontal line periods the output signal of said still further means for logically combining.

4. The apparatus as claimed in claim 1, wherein the first uncorrelaton detector comprises an XOR circuit, as said means for logically combining.

5. The apparatus as claimed in claim 1, wherein the second uncorrelation detector comprises five Flip-Flops FF 1, FF 2, FF 3, FF 4, FF 5 connected serially for receiving the line sync signal in a bit-by-bit fashion and three XOR circuits 6,7,8 for detecting uncorrelation between the three LSBs and the MSBs in the data patterns, wherein the input of the FF 1 and the output of the FF 5 are provided to the XOR circuit 6, each of the outputs of the FF 4 and FF 1 is provided to the XOR circuit 7 and each of the outputs of the FF 3 and FF 2 is provided to the XOR circuit 8.

6. The apparatus as claimed in claim 1, wherein said means for detecting line sync signals comprise an AND circuit for logical ANDing of said first and second output signals, a 1H delay circuit for delaying the output signal of the AND circuit by one horizontal line period, and an OR circuit for generating a line sync detection signal in response to the 1H delayed signal by said latter 1H delay circuit and the output signal of the AND circuit.

7. The apparatus as claimed in any of claims 1-3, wherein said means for detecting the frame sync signals comprise an AND circuit for logical ANDing of said first and second output signals, a 2H delay circuit for delaying the output signal of the AND circuit by two horizontal line periods, and an OR circuit for generating a frame sync detection signal in response to the 2H delayed signal by the 2H delay circuit and the output signal of said latter AND circuit.

8. The apparatus as claimed in claim 7, wherein the 2H delay circuit comprises a first 1H delay circuit and a second 1H delay circuit connected with the output of the first 1H delay circuit.

## Patentansprüche

1. Vorrichtung zum Erfassen von Linien- und Frame-Synchronisationssignalen aus digitalen Daten eines Fernsehsignals,
a) wobei jedes der Linien-Synchronisationssignale abwechselnd ein erstes und ein zweites Datenmuster W1 und W2 in digitaler Form aufweist,
- die Datenmuster W1 und W2 zueinander auf einer, Bit-zu-Bit-Basis unkorreliert sind,
- jedes der Datenmuster W1 und W2 aus wenigstens drei niedrigstwertigen Bits, d.h. LSBs, und drei höchstwertigen Bits, d.h. MSBs, besteht,
- die drei LSBs und drei MSBs zueinander auf einer Bit-zu-Bit-Basis unkorreliert sind, wenn die MSBs in umgekehrter Reihenfolge genommen werden,
b) jedes der Rahmen-Synchronisationssignale ein erstes Paar gleicher Datenmuster und ein zweites Paar gleicher Datenmuster aufweist,
- das Datenmuster des ersten Paars und das Datenmuster des zweiten Paars zueinander auf einer Bit-zu-Bit-Basis unkorreliert sind,
wobei die Vorrichtung gekennzeichnet ist durch
c) einen ersten Nicht-Korrelations-Detektor mit
- einer 1H-Verzögerungsschaltung zum Verzögern des Linien-Synchronisationssignals um eine horizontale Linienperiode und
- einem Mittel zum logischen Kombinieren des Linien-Synchronisationssignals und eines 1H-verzögerten Linien-Synchronisationssignals, das von der 1H-Verzögerungsschaltung verzögert wird, zum Erfassen einer Nicht-Korrelation zwischen den Datenmustern des Linien-Synchronisationssignals und des 1H-Verzögerten-Linien-Synchronisationssignals und zum Erzeugen eines entsprechenden ersten Ausgangssignals;
d) einem zweiten Nicht-Korrelations-Detektor, der ein Mittel zum logischen Kombinieren der LSBs und MSBs, zum Erfassen einer Nicht-Korrelation zwischen den drei LSBs und den drei MSBs in einem empfangenen Datenmuster, wobei die drei MSBs in umgekehrter Reihenfolge genommen werden, und folglich eines der Datenmuster W1 und W2 erfaßt wird, und zum Erzeugen eines entsprechenden zweiten Ausgangssignals aufweist, wenn die Datenmuster W1 oder W2 erfaßt werden;
e) einem Mittel zum Erfassen des Linien-Synchronisationssignals als Antwort auf das erste und das zweite Ausgangssignal; und
f) einem Mittel zum Erfassen des Frame-Synchronisationssignals als Antwort auf das erste und das zweite Ausgangssignal.

2. Vorrichtung nach Anspruch 1,
dadurch gekennzeichnet, daß
das Mittel zum Erfassen des Linien-Synchronisationssignals zum Erzeugen von Liniensynchronisation-Erfassungssignalen ausgelegt ist und
a) ein weiteres Mittel zum logischen Kombinieren des ersten und des zweiten Ausgangssignals und
b) ein Mittel zum Verzögern des Ausgangssignals des weiteren Mittels zum logischen Kombinieren um eine horizontale Linienperiode
aufweist.

3. Vorrichtung nach Anspruch 1 oder 2,
dadurch gekennzeichnet, daß
das Mittel zum Erfassen des Frame-Synchronisationssignals zum Erzeugen von Framesynchronisation-Erfassungssignalen ausgelegt ist und
a) noch ein weiteres Mittel zum logischen Kombinieren des ersten und des zweiten Ausgangssignals und
b) ein Mittel zum Verzögern des Ausgangssignals des noch weiteren Mittels zum logischen Kombinieren um zwei horizontale Linienperioden
aufweist.

4. Vorrichtung nach Anspruch 1, bei welcher der erste Nicht-Korrelations-Detektor eine XOR-Schaltung als dieses Mittel zum logischen Kombinieren aufweist.

5. Vorrichtung nach Anspruch 1, bei welcher der zweite Nicht-Korrelations-Detektor fünf Flip-Flops FF 1, FF 2, FF 3, FF 4, FF 5, die in Serie zum Empfangen des Linien-Synchronisationssignals auf eine Bit-zu-Bit-Weise verbunden sind, und drei XOR-Schaltungen 6, 7, 8 zum Erfassen einer Nicht-Korrelation zwischen den drei LSBs und den MSBs in den Datenmustern aufweist, wobei die Eingabe des FF 1 und die Ausgabe des FF 5 der XOR-Schaltung 6 bereitgestellt werden, jeder der Ausgaben der FF 4 und FF 1 der XOR-Schaltung 7 bereitgestellt werden und jede der Ausgaben der FF 3 und FF 2 der XOR-Schaltung 8 bereitgestellt werden.

6. Vorrichtung nach Anspruch 1, bei welcher das Mittel zum Erfassen der Linien-Synchronisationssignale eine UND-Schaltung zum logischen UND-Verknüpfen des ersten und des zweiten Ausgangssignals, eine 1H-Verzögerungsschaltung zum Verzögern des Ausgangssignals der UND-Schaltung um eine horizontale Linienperiode und eine ODER-Schaltung zum Erzeugen eines Liniensynchronisation-Erfassungssignals als Antwort auf das durch die letztere 1H-Verzögerungsschaltung lH-verzögerte Signal und das Ausgangssignal der UND-Schaltung aufweist.

7. Vorrichtung nach einem der Ansprüche 1 bis 3, bei welcher das Mittel zum Erfassen des Frame-Synchronisationssignals eine UND-Schaltung zum logischen UND-Verknüpfen des ersten und des zweiten Ausgangssignals, eine 2H-Verzögerungsschaltung zum Verzögern des Ausgangssignals der UND-Schaltung um zwei horizontale Linienperioden und eine ODER-Schaltung zum Erzeugen eines Framesynchronisation-Erfassungssignals als Antwort auf das durch die 2H-Verzögerungsschaltung 2H-verzögerte Signal und das Ausgangssignal der letzteren UND-Schaltung aufweist.

8. Vorrichtung nach Anspruch 7, bei welcher die 2H-Verzögerungsschaltung eine erste 1H-Verzögerungsschaltung und eine zweite 1H-Verzögerungsschaltung aufweist, welche mit dem Ausgang der ersten 1H-Verzögerungsschaltung verbunden ist.

## Revendications

1. Dispositif pour détecter des signaux de synchronisation ligne et trame à partir de données numériques d'un signal de télévision,
a) chacun des signaux de synchronisation ligne et trame comportant alternativement un premier et un deuxième motifs de données W1 et W2 sous une forme numérique,
- les motifs de données W1 et W2 étant non corrélés entre eux bit par bit,
- chacun des motifs de données W1 et W2 étant constitué d'au moins trois bits les moins significatifs, à savoir des LSB, et trois bits les plus significatifs, à savoir des MSB,
- les trois LSB et les trois MSB étant non corrélés entre eux bit par bit, lorsque les MSB sont pris en ordre inverse,
b) chacun des signaux de synchronisation trame comportant une première paire des mêmes motifs de données et une deuxième paire des mêmes motifs de données,
le motif de données de ladite première paire et le motif de données de ladite deuxième paire étant non corrélés entre eux bit par bit,
le dispositif étant caractérisé par
c) un premier détecteur de non-corrélation comprenant
- un circuit de retard de 1H pour retarder le signal de synchronisation ligne d'une période de ligne horizontale et
- des moyens pour associer logiquement le signal de synchronisation ligne à un signal de synchronisation ligne retardé de 1H, retardé par ledit circuit de retard de 1H, pour détecter une non-corrélation entre les motifs de données du signal de synchronisation ligne et du signal de synchronisation ligne retardé de 1H et pour générer un premier signal de sortie correspondant ;
d) un deuxième détecteur de non-corrélation comprenant des moyens pour associer logiquement lesdits LSB et MSB, pour détecter une non-corrélation entre lesdits trois LSB et lesdits trois MSB dans un motif de données reçu, lesdits trois MSB étant pris en ordre inverse, détectant ainsi l'un des motifs de données W1 et W2, et pour générer un deuxième signal de sortie correspondant, lors de la détection desdits motifs de données W1 ou W2 ;
e) des moyens pour détecter les signaux de synchronisation ligne en réponse auxdits premier et deuxième signaux de sortie ; et
f) des moyens pour détecter les signaux de synchronisation trame en réponse auxdits premier et deuxième signaux de sortie.

2. Dispositif selon la revendication 1,
caractérisé en ce que
lesdits moyens pour détecter les signaux de synchronisation ligne sont conçus pour générer des signaux de détection de synchronisation ligne et comprennent
a) d'autres moyens pour combiner logiquement lesdits premier et deuxième signaux de sortie et
b) des moyens pour retarder d'une période de ligne horizontale le signal de sortie desdits autres moyens d'association logique.

3. Dispositif selon la revendication 1 ou 2, caractérisé en ce que
lesdits moyens pour détecter les signaux de synchronisation trame sont conçus pour générer des signaux de détection de synchronisation trame et comprennent
a) encore d'autres moyens pour associer logiquement lesdits premier et deuxième signaux de sortie et
b) des moyens pour retarder de deux périodes de ligne horizontale le signal de sortie desdits autres moyens d'association logique.

4. Dispositif selon la revendication 1, dans lequel le premier détecteur de non-corrélation comprend un circuit OU EXCLUSIF constituant lesdits moyens de combinaison logique.

5. Dispositif selon la revendication 1, dans lequel le deuxième détecteur de non-corrélation comprend cinq bascules FF 1, FF 2, FF 3, FF 4, FF 5, connectées en série pour recevoir le signal de synchronisation ligne d'une façon bit par bit, et trois circuits OU EXCLUSIF 6, 7, 8, pour détecter une non-corrélation entre les trois LSB et MSB des motifs de données, dans lequel l'entrée de FF 1 et la sortie de FF 5 sont délivrées au circuit OU EXCLUSIF 6, chacune des sorties de FF 4 et FF 1 est délivrée au circuit OU EXCLUSIF 7 et chacune des sorties de FF 3 et FF 2 est délivrée au circuit OU EXCLUSIF 8.

6. Dispositif selon la revendication 1, dans lequel lesdits moyens pour détecter des signaux de synchronisation ligne comprennent un circuit ET pour effectuer un ET logique desdits premier et deuxième signaux de sortie, un circuit de retard de 1H pour retarder le signal de sortie du circuit ET d'une période de ligne horizontale et un circuit OU pour générer un signal de détection de synchronisation ligne en réponse au signal retardé de 1H par ledit dernier circuit de retard de 1H et au signal de sortie du circuit ET.

7. Dispositif selon l'une quelconque des revendications 1 à 3, dans lequel lesdits moyens pour détecter les signaux de synchronisation trame comprennent un circuit ET pour effectuer un ET logique desdits premier et deuxième signaux de sortie, un circuit de retard 2H pour retarder le signal de sortie du circuit ET de deux périodes de ligne horizontale et un circuit OU pour générer un signal de détection de synchronisation trame en réponse au signal retardé de 2H par le circuit de retard de 2H et au signal de sortie dudit dernier circuit ET.

8. Dispositif selon la revendication 7, dans lequel le circuit de retard de 2H comprend un premier circuit de retard de 1H et un deuxième circuit de retard de 1H connecté à la sortie du premier circuit de retard de 1H.
